(19) Europäisches Patentamt
European Patent Office
Office européen des brevets

(11) **EP 2 339 711 A2**

(12) **EUROPÄISCHE PATENTANMELDUNG**

(43) Veröffentlichungstag:
**29.06.2011 Patentblatt 2011/26**

(51) Int Cl.:
**H02J 1/10** *(2006.01)*      **H02J 3/36** *(2006.01)*

(21) Anmeldenummer: **10196735.4**

(22) Anmeldetag: **23.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.12.2009 DE 102009060584**

(71) Anmelder: **Technische Universität Dresden**
**01069 Dresden (DE)**

(72) Erfinder:
• **Schmuck, Christian**
 **01069 Dresden (DE)**

• **Woittennek, Frank**
 **01099 Dresden (DE)**
• **Gensior, Albrecht**
 **01277 Dresden (DE)**
• **Rudolph, Joachim**
 **66125 Saarbrücken (DE)**

(74) Vertreter: **Adler, Peter**
**Lippert, Stachow & Partner**
**Krenkelstrasse 3**
**01309 Dresden (DE)**

(54) **Verfahren zur Energieverteilung in einem Gleichstromübertragungsnetz**

(57) Der Erfindung, welche eine Verfahren zur Energieverteilung in einem Gleichstromübertragungsnetz betrifft, liegt die Aufgabe zugrunde, ein Verfahren zur Energieverteilung anzugeben, mit welchem die aus dem Stand der Technik bekannten Nachteile überwunden werden. Gemäß der Erfindung wird die Aufgabe dadurch gelöst, dass eine Modellbeschreibung des Gleichstromübertragungsnetzes, in welchem mindestens eine Energiequelle und zwei Senken oder mindestens zwei Energiequellen und eine Senke miteinander verschaltet sind, erzeugt wird, dass für einen Übergang von einem ersten stationären Zustand des Gleichstromübertragungsnetzes in einen zweiten stationären Zustand des Gleichstromübertragungsnetzes eine Basisgröße y gewählt wird, dass für diese Basisgröße y Trajektorien, welche das transiente Verhalten während des Übergangs bestimmen, festgelegt werden, dass mittels dieser Trajektorien für Komponenten der Basisgröße y, für eine flachheitsbasierte Steuerung, Stellgrößen der Konverter anhand der Modellbeschreibung ermittelt und die Konverter mittels dieser Stellgrößen geregelt werden. (Fig. 2)

Fig. 2

EP 2 339 711 A2

**Beschreibung**

Die Erfindung betrifft ein Verfahren zur Energieverteilung in einem Gleichstromübertragungsnetz, beispielsweise bei einer Hochspannungsgleichstromübertragung HGÜ, zwischen Energiequellen und Senken, welche räumlich voneinander getrennt sind und mittels Leitungen miteinander verbindbar sind, wobei die von den Energiequellen erzeugte Energie auf die angeschlossenen Senken verteilt wird.

Elektrische Energie lässt sich sowohl mit Wechselstrom und Wechselspannung als auch mit Gleichstrom und Gleichspannung übertragen. Bei der Entwicklung der heute existierenden Verteilnetze setzten sich die Wechselgrößen durch, da sie sich im Gegensatz zu den Gleichgrößen einfach mit elektromagnetischen Transformatoren auf unterschiedliche Spannungsebenen transformieren lassen. Erst mit Hilfe der Halbleitertechnologie gelang die Realisierung von leistungsfähigen Konvertern zum Gleich- und Wechselrichten von Strom und Spannung. Damit wurde die effiziente Anbindung von Gleichstromübertragungsstrecken an bestehende Wechselstromnetze möglich. Dies war die Voraussetzung zur Entwicklung der sogenannten Hochspannungsgleichstromübertragung (HGÜ).

HGÜ bietet vor allem bei großen Übertragungsdistanzen Vorteile gegenüber der Wechselstromübertragung, denn die Leitungslänge in Wechselstromnetzen ist grundsätzlich begrenzt. Das liegt zum Einen an der Kapazität der Leitung, die ab einer bestimmten Leitungslänge zu unzulässig hohen Blindströmen führt. Zum Anderen können bei zu langen Leitungen Strom- und Spannungswellen an den Leitungsenden so ungünstig reflektiert werden, dass eine störungsfreie Wechselstromübertragung unmöglich wird.

Diese technischen Grenzen bestehen bei der HGÜ nicht. Desweiteren sind die Materialkosten für die Leitungen bei Gleichstromanlagen geringer. Deshalb ist die HGÜ auch aus wirtschaftlicher Sicht besonders für große Entfernungen interessant, da erst dann die Einsparungen bei den Leitungen die hohen Kosten für die benötigten Konverterstationen übersteigen.

Bei der Hochleistungsenergieübertragung über große Distanzen wird die HGÜ-Technik (HGÜ Hochspannungsgleichstromübertragung) bis heute fast ausschließlich als Punkt-zu-Punkt Verbindung eingesetzt.

Im Stand der Technik ist ein Energieerzeuger, auch als Quelle bezeichnet, und ein Energieverbraucher, welcher als Senke bezeichnet wird, über je einen Konverter und eine längere Leitung miteinander verbunden. Entsprechend der Richtung des Energieflusses wirkt einer der beiden Konverter als Gleichrichter und der andere als Wechselrichter.

Bei dieser Form der Zusammenschaltung, als Punkt-zu-Punkt Verbindung, beinhaltet entweder die Quelle oder die Senke eine entsprechende Regeleinrichtung, um die vorgegebenen Parameter zu regeln. Beim Stand der Technik ist vorgesehen, dass eine Seite die Spannungsregelung und die andere Seite die Leistungsregelung übernimmt.

Mittels dieser Regeleinrichtungen stellt sich im laufenden Betrieb ein sogenannter stationärer Zustand ein, bei welchen die Quelle eine bestimmte Energie bereitstellt, welche von der Senke verbraucht wird.

Benötigt nun beispielsweise die Senke mehr Energie, so werden sich die im stationären Zustand eingestellten Parameter Strom und/oder Spannung auf der Leitung verändern. Diese Veränderung wird dann von der Quelle registriert und mittels der Regeleinrichtung der Quelle ausgeglichen. Auch wenn sich bei einer Leitungslänge von 1000 km zwischen der Quelle und der Senke Totzeiten von ca. 10 ms ergeben, ist bei dieser Form der Zusammenschaltung die Regelung ausreichend.

Bei einer einfachen Erweiterung der aus dem Stand der Technik bekannten Punkt-zu-Punkt Verbindung zwischen einer Energiequelle und einer Senke um eine weitere Energiequelle oder Senke zeigt sich, dass die Steuerung zwischen den Konverterstationen nicht zufriedenstellend funktioniert, da lange Einschwingvorgänge mit problematischen Spannungswellen auftreten.

Bei der bekannten Droop-Methode beruht die Regelung nur auf den Spannungswerten an den Anschlusspunkten der Konverter des Typs 2. Damit ist bei Einsatz langer Leitungen mit großen Totzeiten und gleichzeitig geringer Dämpfung ein akzeptables Regelergebnis nicht mehr zu erreichen.

Herkömmlichen Verfahren zur Betriebsführung von Hochspannungsgleichstromübertragungssystemen mit mehreren Teilnehmern sind die "Droop"-Methode und die "Master/Slave"-Methode.

Bei der Droop-Methode können die Konverter vom Typ 1 ihren Konverterstrom frei vorgeben. Die Konverter vom Typ 2 hingegen sind mit einer Spannungsregelung ausgestattet, die den Konverterstrom als Stellgröße benutzt, um die Leitungsspannung auf einem Sollwert zu halten. Es muss mindestens ein Konverter mit Spannungsregelung angeschlossen sein, um eine Stabilisierung der Gleichspannung auf dem gemeinsamen Leitungsnetzwerk sicherzustellen. Bei den Konvertern vom Typ 2 basiert die Regelung der Spannung allein auf dem lokalen Spannungsfehler, sodass man ohne Kommunikation zwischen den Konverterstationen auskommt.

Beim Master/Slave-Konzept wird davon ausgegangen, dass Kommunikation mit den Konverterstationen möglich ist. Eine dem Gesamtsystem übergeordnete Steuereinheit registriert die entnommene oder eingespeiste Leistung aller Konverter vom Typ 1 und verteilt die Last auf die Konverter vom Typ 2 durch entsprechende Stromvorgaben. Nur einer der Konverter vom Typ 2, der Master, regelt zusätzlich die Leiterspannung um eine vollkommen ausgeglichene Leistungsbilanz zu sichern. Durch die Möglichkeit der Kommunikation und die zentrale Steuerung ist die Master/Slave-Lösung flexibler aber auch aufwendiger.

Die Aufgabe der Erfindung besteht somit darin, ein Verfahren zur Energieverteilung in einem Gleichstromübertragungsnetz anzugeben, mit welchem die aus dem Stand der Technik bekannten Nachteile überwunden werden.

Gemäß der Erfindung wird die Aufgabe bei einem Verfahren zur Energieverteilung in einem Gleichstromübertragungsnetz dadurch gelöst, dass eine Modellbeschreibung des Gleichstromübertragungsnetzes, in welchem mindestens eine Energiequelle und zwei Senken oder mindestens zwei Energiequellen und eine Senke miteinander verschaltet sind, erzeugt wird, dass für einen Übergang von einem ersten stationären Zustand des Gleichstromübertragungsnetzes in einen zweiten stationären Zustand des Gleichstromübertragungsnetzes eine Basisgröße y gewählt wird, dass für diese Basisgröße y Trajektorien, welche das transiente Verhalten während des Übergangs bestimmen, festgelegt werden, dass mittels dieser Trajektorien für Komponenten der Basisgröße y, für eine flachheitsbasierte Steuerung, Stellgrößen der Konverter anhand der Modellbeschreibung ermittelt und die Konverter mittels dieser Stellgrößen geregelt werden.

Ein aus beispielsweise drei Konvertern bestehendes Gleichstromübertragungsnetz, wobei der erste Konverter einer Energiequelle und der zweite und dritte Konverter je einer Senke zugeordnet ist, befindet sich in einem ersten stationären Zustand. Dieser wird genau dann erreicht, wenn die vom ersten angeschlossenen Konverter eingespeiste Gesamtleistung die vom zweiten und dritten Konverter entnommene Leistung sowie die Leitungsverluste genau ausgleicht.

Ändert sich beispielsweise der Leistungsbedarf der mit dem zweiten Konverter verbundenen Senke, wobei der Leistungsbedarf der mit dem dritten Konverter verbundenen Senke konstant bleibt, so muss die von der Energiequelle über den ersten Konverter eingespeiste Gesamtleistung geändert werden, um wiederum einen stationären Zustand des Gleichstromübertragungsnetzes zu erreichen.

In diesem zweiten stationären Zustand entspricht die eingespeiste Gesamtleistung der dem ersten stationären Zustand plus der Änderung des Leistungsbedarfes der mit dem zweiten Konverter verbundenen Senke.

Das erfindungsgemäße Verfahren, welches in einer dem Gleichstromübertragungsnetz übergeordneten Instanz abläuft, überführt das System von einem ersten stationären Zustand in einen zweiten stationären Zustand indem das Gleichstromübertragungsnetz in einem mathematischen Modell abgebildet wird, der Verlauf des Übergangs zwischen den beiden stationären Zuständen beispielsweise bezüglich der Ausgangs- und/oder Eingangsspannungen und -ströme der Konverter festgelegt wird und aus diesen Vorgaben die Regelgrößen für die im Gleichstromübertragungsnetz angeordneten Konverter berechnet werden.

Über ein Kommunikationsnetz, an welches alle Konverter angeschlossen sind, werden die berechneten Steuergrößen, welche sich in einem zeitlichen Verlauf ändern, an die Konverter übertragen. Nachfolgend werden die Konverter zeitsynchron mittels der berechneten Steuergrößen gesteuert und das Gleichstromübertragungsnetz vom ersten in den zweiten Stationären Zustand überführt.

Nach der Anmeldung eines geänderten Leistungsbedarfes einer beliebigen Senke des Gleichspannungsnetzes bei der übergeordneten zentralen Instanz werden also mittels des erfindungsgemäßen Verfahrens die für diesen geänderten Bedarf notwendigen zeitabhängigen Steuergrößen der Konverter ermittelt.

In einer weiteren Ausführung der Erfindung ist vorgesehen, dass das Netzwerk ein baumförmiges Netzwerk ist.

Ein baumartiges Netz ist **dadurch gekennzeichnet, dass** es zwischen zwei beliebigen Knoten genau einen Pfad durch das Leitungsnetz gibt. Dies bedeutet, dass ein solches Netz frei von Maschen ist. Das erfindungsgemäße Verfahren nutzt diesen Ansatz bei der Erzeugung der Modellbeschreibung.

In einer Ausführungsform der Erfindung ist vorgesehen, dass das Gleichstromübertragungsnetz ein maschenförmiges Netzwerk ist.

Neben einer Realisierung der Erfindung mittels eines baumförmigen Netzwerks ist auch eine Realisierung mit einem maschenförmigen Netzwerk möglich.

In einer Realisierung der Erfindung ist vorgesehen, dass die Stellgröße eines Konverters ein Strom ist.

Mittels des erfindungsgemäßen Verfahrens können vorgegebene Konverterstromverläufe zur Berechnung der notwendigen Steuergrößen genutzt werden.

Die Erfindung soll nachfolgend anhand eines Ausführungsbeispiels näher erläutert werden. In den zugehörigen Zeichnungen zeigt

Fig. 1    eine schematische Darstellung eines maschenförmigen Netzwerks zur Energieübertragung zwischen drei Teilnehmern und

Fig. 2    eine schematische Darstellung eines baumartigen Netzwerks zur Energieübertragung zwischen drei Teilnehmern.

Als erfindungsgemäße Alternative zur Droop Methode soll deshalb nun ein flachheitsbasiertes Verfahren aufgezeigt werden, mit dem die langen und unkontrollierten Einschwingvorgänge durch zeitlich abgestimmte Steuerung der einzelnen Konverter vermieden werden können.

Der Begriff Flachheit beschreibt hier eine mathematische Eigenschaft des Konzeptes, dass 1992 von Fliess, Lévine und Rouchon ursprünglich für Systeme mit konzentrierten Parametern eingeführt wurde und bei welchem ein Ereignis vollständig durch einen zeitlichen Verlauf, beispielsweise am Ausgang eines Konverters, beschrieben werden kann.

Bei einer Beschreibung eines allgemeinen Netzwerks oder einer Netzwerkstruktur, bestehend aus vermaschten Leitungen können drei Typen von Knoten betrachtet werden:

    1. passive Knoten ohne Konverter (kein Stelleingriff)
    2. aktive Knoten mit einer als Stromquelle agierenden Konverterstation, die während des Umschaltens zwischen verschiedenen Regimes temporär aktiviert werden kann
    3. aktive Knoten mit einer als Strom- oder Spannungsquelle agierenden Konverterstation, die in beliebigen Situationen aktiviert werden kann.

Dabei geht man von einer Gesamtzahl von $n_K$ Knoten aus, die in beliebiger Reihenfolge nummeriert werden. Ihre Indizes werden entsprechend ihres Typs in den Mengen $K_i$ mit den Kardinalitäten $n_i$, $i$ = 1, 2, 3 zusammengefasst.

Zwei beliebige Knoten des Netzwerkes können durch eine Leitung verbunden werden. Diejenige Leitung, die die Knoten $K_\mu$ und $K_\nu$ verbindet, wird dabei mit $L_{\mu,\nu}$ bezeichnet, wobei Leitungen $L_{\mu,\nu}$ und $L_{\nu,\mu}$ miteinander identifiziert werden. Die Menge der Indexpaare aller Leitungen ist $\mathcal{L}$. Die Kardinalität von $\mathcal{L}$, also die Anzahl der im Netzwerk vorhandenen Leitungen, ist $n_L$. Für die im Knoten $K_\mu$ liegende Ortskoordinate einer Leitung $L_{\mu,\nu}$ wird die Notation $z_{\mu,\nu}$ verwendet, für jene im Knoten $K_\nu$ die Notation $z_{\nu,\mu}$.

Zusätzlich wird jeder Leitung eine Richtung zugeordnet, indem man annimmt, dass eine Leitung vom Knoten mit geringerem Index zum Knoten mit höherem Index gerichtet ist. Dementsprechend legt man

$$z_{\mu,\nu} = \begin{cases} 0, & \text{falls } \mu < \nu \\ l_{\mu,\nu}, & \text{falls } \mu > \nu \end{cases} \tag{1}$$

fest, wobei $l_{\mu,\nu} = l_{\nu,\mu}$ die Länge der Leitung $L_{\mu,\nu}$ ist.

Als Nachbarknoten eines Knotens $K_\mu$ wird jeder Knoten $K_\nu$ bezeichnet, zu dem eine Leitung $L_{\mu,\nu}, (\mu,\nu) \in \mathcal{L}$ existiert. Die Menge der Indizes der Nachbarknoten zu $K_\mu$ wird mit $N_\mu$ bezeichnet. In jedem Knoten $K_\mu$ gelten die Rand- und Anschlussbedindungen

$$u_{\mu,\nu}(z_{\mu,\nu}, t) = U_\mu(t), \quad \nu \in \mathcal{N}_\mu, \mu \in \mathcal{K}, \tag{2a}$$

wobei die Knotenspannung $U_\mu$ ein freier Parameter ist. Die Richtung des Stromzählpfeils auf einer Leitung soll mit der ihr zugeordneten Richtung vom Knoten mit geringerem Index zum Knoten mit höherem Index übereinstimmen. An jedem Knoten folgt deshalb aus dem Knotensatz

$$\sum_{\nu \in \mathcal{N}_\mu} \zeta_{\mu,\nu} i_{\mu,\nu}(z_{\mu,\nu}, t) = I_\mu(t), \quad \mu \in \mathcal{K} \tag{2b}$$

mit

$$\zeta_{\mu,\nu} = \begin{cases} -1, & \text{falls } \mu < \nu \\ 1, & \text{falls } \mu > \nu \end{cases}$$

Der Zählpfeil des Stromes $I_\mu(t)$ zeigt dabei vom Knoten $K_\mu$ weg. Weiterhin gilt $I_\mu(t) = 0$ für Knoten vom Typ 1 und $I_\mu(t)$ frei wählbar für Knoten vom Typ 3. Für Knoten vom Typ 2 ist $I_\mu(t)$ nur während des instationären Regimes frei wählbar, während im stationären Betrieb $I_\mu(t) = 0$ gelten muss. Im Falle eines aktiven Knotens ist in Abhängigkeit von der Art des Stelleingriffs (Strom- oder Spannungsquelle) entweder $I_\mu$ oder $U_\mu$ die durch den Konverter einstellbare Stellgröße.

Die ortsabhängigen Spannungs- und Stromprofile auf einer

Leitung $L_{\mu,\nu}(\mu,\nu) \in \mathcal{L}$ werden durch die Differentialgleichungen

$$\frac{\partial u_{\mu,\nu}}{\partial z}(z,t) + L\frac{\partial i_{\mu,\nu}}{\partial t}(z,t) + Ri_{\mu,\nu}(z,t) = 0$$

$$\frac{\partial i_{\mu,\nu}}{\partial z}(z,t) + C\frac{\partial u_{\mu,\nu}}{\partial t}(z,t) + Gu_{\mu,\nu}(z,t) = 0 \tag{3}$$

mit den konstanten Leitungsparametern Induktivitätsbelag $L$, Kapazitätsbelag $C$, Widerstandsbelag $R$ und Ableitungsbelag $G$ beschrieben. Diese Parameter sind im Allgemeinen für jede Leitung unterschiedlich, auf eine separate Indizierung wird jedoch zu Gunsten einer besseren Lesbarkeit verzichtet. Zur Erlangung eines grundlegenden Verständnisses der hier dargestellten Verfahren kann zunächst auch davon ausgegangen werden, dass die Leitungsparameter aller Leitungen gleich sind.

Nachfolgend wird ein Verfahren zur Festlegung einer Lastaufteilung in einem stationären Betrieb beschrieben.

Im stationären Betrieb des Gleichstromübertragungsnetzes agieren lediglich die Knoten vom Typ 3 als Strom oder Spannungsquellen. Die Differentialgleichungen der Leitungen lauten dann

$$\frac{d\bar{u}_{\mu,\nu}}{dz}(z) + R\bar{i}_{\mu,\nu}(z) = 0$$

$$\frac{d\bar{i}_{\mu,\nu}}{dz}(z) + G\bar{u}_{\mu,\nu}(z) = 0 \tag{4}$$

wobei $\bar{i}_{\mu,\nu}$ und $\bar{u}_{\mu,\nu}$ die Ströme und Spannungen im stationären Betrieb bezeichnen. In den Knoten gelten die Randbedingungen

$$\bar{u}_{\mu,\nu}(z_{\mu,\nu}) = \bar{U}_\mu, \quad \nu \in \mathcal{N}_\mu \tag{5a}$$

sowie

$$\sum_{\nu\in\mathcal{N}_\mu} \zeta_{\mu,\nu}\bar{i}_{\mu,\nu}(z_{\mu,\nu}) = \bar{I}_\mu, \quad \mu\in\mathcal{K}_3$$

$$(5b)$$

beziehungsweise

$$\sum_{\nu\in\mathcal{N}_\mu} \zeta_{\mu,\nu}\bar{i}_{\mu,\nu}(z_{\mu,\nu}) = 0, \quad \mu\in\mathcal{K}_1\cup\mathcal{K}_2$$

$$(5c)$$

Die Lösung der stationären Leitungsgleichung (4) lautet allgemein

$$\begin{pmatrix} \bar{u}_{\mu,\nu}(z) \\ \bar{i}_{\mu,\nu}(z) \end{pmatrix} = \bar{\Phi}(z - z_{\mu,\nu}) \begin{pmatrix} \bar{u}_{\mu,\nu}(z_{\mu,\nu}) \\ \bar{i}_{\mu,\nu}(z_{\mu,\nu}) \end{pmatrix}$$

$$(6)$$

mit

$$\bar{\Phi}(z) = \begin{pmatrix} \cosh(z\bar{\lambda}) & -\sqrt{\frac{G}{R}}\sinh(z\bar{\lambda}) \\ -\sqrt{\frac{R}{G}}\sinh(z\bar{\lambda}) & \cosh(z\bar{\lambda}) \end{pmatrix}, \quad \bar{\lambda} = \sqrt{RG}$$

$$(7)$$

Insbesondere ergibt sich für den Zusammenhang der Ströme und Spannungen an den jeweiligen Enden der betrachteten Leitung aus (6) unter Berücksichtigung der Randbedingungen (5a)

$$\begin{pmatrix} \bar{U}_\nu \\ \bar{i}_{\mu,\nu}(z_{\nu,\mu}) \end{pmatrix} = \bar{\Phi}(\zeta_{\nu,\mu}l_{\mu,\nu}) \begin{pmatrix} \bar{U}_\mu \\ \bar{i}_{\mu,\nu}(z_{\mu,\nu}) \end{pmatrix}$$

$$(8)$$

Zu diesem aus $2n_L$ Gleichungen bestehenden Gleichungssystem für die $2n_L$ Ströme an den Endpunkten der Leitungen und $n_K$ Knotenspannungen $U_\mu$ kommen insgesamt $n_K$ Gleichungen, die aus den Randbedingungen (5b) und (5c) resultieren und in denen $n_3$ zusätzliche Variablen $\bar{I}_\mu, \mu \in K_3$ auftreten. Zusammengefasst sind dies $2n_L + n_K$ Gleichungen für $2n_L + n_K + n_3$ Größen. In Übereinstimmung mit der Anzahl der Stellgrößen können somit genau $n_3$ Parameter im stationären Betrieb frei gewählt werden.

Zur Parametrierung einer stationären Lösung werden deshalb insgesamt $n_3$ der Größen

$$\bar{I}_\mu, \ \mu \in \mathcal{K}_3, \quad \bar{U}_\mu, \ \mu \in \mathcal{K}, \quad \bar{i}_{\mu,\nu}(z_{\mu,\nu}), \bar{i}_{\mu,\nu}(z_{\nu,\mu}), \ (\mu,\nu) \in \mathcal{L}$$

derart ausgewählt, dass sich die übrigen Spannungen und Ströme in den Knoten und damit gemäß (4) auch auf den Leitungen auf eindeutige Art und Weise aus diesen berechnen lassen.

Nachfolgend wird ein Verfahren zur Bestimmung geeigneter Größen zur Parametrierung von Umschaltvorgängen, also dem Übergang von einem ersten stationären Zustand in einen zweiten stationären Zustand, beschrieben.

Die Zusammenhänge zur Berechnung der Ströme und Spannungen für eine in endlicher Zeit abgeschlossene Überführung zwischen zwei stationären Zuständen werden mit Hilfe der Laplacetransformation dargestellt, wobei die Laplacetransformierte einer Größe $x$ im Folgenden mit $\hat{x}$ bezeichnet wird. Im Laplace-Bildbereich können die Ströme und Spannungen folgendermaßen parametriert werden:

$$\begin{pmatrix} \hat{u}_{\mu,\nu}(z) \\ \hat{i}_{\mu,\nu}(z) \end{pmatrix} = \Phi(z - z_{\mu,\nu}) \begin{pmatrix} \hat{u}_{\mu,\nu}(z_{\mu,\nu}) \\ \hat{i}_{\mu,\nu}(z_{\mu,\nu}) \end{pmatrix} \tag{9}$$

wobei

$$\Phi(z) = \begin{pmatrix} C_1(z) & -(G + sC)C_2(z) \\ -(R + sL)C_2(z) & C_1(z) \end{pmatrix}$$

und

$$C_2(z) = \frac{\sinh(z\lambda)}{\lambda}, \ C_1(z) = \cosh(z\lambda), \quad \lambda = \sqrt{RG + s(RC + LG) + LCs^2} \ .$$

Insbesondere ergibt sich für den Zusammenhang der Ströme und Spannungen an den jeweiligen Enden der betrachteten Leitung aus (9) unter Berücksichtigung der Randbedingungen (2a)

$$\begin{pmatrix} \hat{U}_\nu \\ \hat{i}_{\mu,\nu}(z_{\nu,\mu}) \end{pmatrix} = \Phi(\zeta_{\nu,\mu} l_{\mu,\nu}) \begin{pmatrix} \hat{U}_\mu \\ \hat{i}_{\mu,\nu}(z_{\mu,\nu}) \end{pmatrix}, \quad (\mu,\nu) \in \mathcal{L} \tag{10}$$

Zu diesem aus $2n_L$ Gleichungen bestehenden Gleichungsystem für die $2n_L$ Ströme an den Endpunkten der Leitungen und $n_K$ Knotenspannungen kommen insgesamt $n_K$ Gleichungen, die aus den Randbedingungen (2b) resultieren und in denen $n_2 + n_3$ zusätzliche Variablen $\bar{I}_\mu, \mu \in K_2 \cup K_3$ auftreten. Zusammengefasst sind dies $2n_L + n_K$

Gleichungen für $2n_L + n_K + n_2 + n_3$ Größen.

In Übereinstimmung mit der Anzahl der Stellgrößen können somit genau $n_2 + n_3$ Parameter im transienten Betrieb frei gewählt werden.

Aus den Größen

$$\hat{I}_{\mu}, \ \mu \in \mathcal{K}_2 \cup \mathcal{K}_3, \quad \hat{U}_{\mu}, \ \mu \in \mathcal{K}, \quad \hat{i}_{\mu,\nu}(z_{\mu,\nu}), \hat{i}_{\mu,\nu}(z_{\nu,\mu}), \ (\mu, \nu) \in \mathcal{L}$$

werden nun $2n_L + n_K$ Größen in einem Vektor $\hat{x}$, die übrigen $n_2 + n_3$ Größen in einem Vektor $\hat{v}$ zusammengefasst. Auf diese Weise können die von den Systemvariablen zu erfüllenden Gleichungen in der Form

$$P\hat{\boldsymbol{x}} = Q\hat{\boldsymbol{v}}$$

mit der quadratischen Matrix $P$ geschrieben werden. Hierbei sind die Größen für den Vektor $\hat{v}$ so auszuwählen, dass $\overline{P} \neq 0$ gilt, wobei man die quadratische Matrix $\overline{P}$ aus $P$ dadurch gewinnt, dass $s$ durch 0 ersetzt wird.

Mittels

$$\hat{\boldsymbol{v}} = \det(P)\hat{\boldsymbol{y}}, \quad \hat{\boldsymbol{x}} = \mathrm{adj}(P)Q\hat{\boldsymbol{y}} \qquad \text{... (11)}$$

wird eine neue Größe $\hat{y}$ eingeführt, die als flacher Ausgang oder Basisgröße bezeichnet wird. Für diese können anschließend Trajektorien frei vorgegeben werden, mit denen das transiente Verhalten während des Übergangs zwischen zwei stationären Regimes parametriert wird.

Beim Verfahren zur Parametrierung von Umschaltvorgängen oder Übergang in einem anderen stationären Zustand wird aus den stationären Regimes, zu denen die Stellgrößenvektoren $v_1 = v(t_1)$ und $v_2 = v(t_2)$ gehören, werden die stationären Werte

$$\overline{\boldsymbol{y}}_i = \overline{\boldsymbol{v}}_i / \det \overline{P}, \quad i = 1, 2$$

für die Größen in $y$ berechnet.

Für den flachen Ausgang $y$ werden geeignete Trajektorien $t \mapsto y(t)$ vorgegeben, die die stationären Anfangswerte mit den stationären Endwerten verbinden. Aus $t \mapsto y(t)$ werden die Trajektorien für die Stellsignale mit Hilfe der Gleichung (11) berechnet.

Hierzu sind Ausdrücke auszuwerten, in denen Produkte von $C_1(z)$, $C_2(z)$ und $sC_2(z)$ mit $y$ multipliziert werden.

Dabei sind die folgenden Rechenregeln anzuwenden $\tau = \sqrt{LC}$:

$$C_2(z)\hat{y} \triangleq \int_{-z\tau}^{z\tau} f(z,\bar{t})y(t-\bar{t})d\bar{t} \qquad\qquad (12\mathrm{a})$$

$$C_1(z)\hat{y} \triangleq \int_{-z\tau}^{z\tau} \frac{\partial f}{\partial z}(z,\bar{t})y(t-\bar{t})d\bar{t} + \tau \left( f(z,z\tau)y(t-z\tau) + f(z,-z\tau)y(t+z\tau) \right) \quad (12b)$$

$$sC_2(z)\hat{y} \triangleq \int_{-z\tau}^{z\tau} \frac{\partial f}{\partial t}(z,\bar{t})y(t-\bar{t})d\bar{t} + f(z,-z\tau)y(t+z\tau) - f(z,z\tau)y(t-z\tau) \quad (12c)$$

mit

$$f(z,t) = \frac{e^{-\gamma t}}{2\tau} J_0(\beta\sqrt{\tau^2 z^2 - t^2}), \quad \beta = \frac{1}{2}\left(\frac{R}{L} - \frac{G}{C}\right), \quad \gamma = \frac{1}{2}\left(\frac{R}{L} + \frac{G}{C}\right)$$

wobei $J_0$ die Besselfunktion erster Art nullter Ordnung bezeichnet.

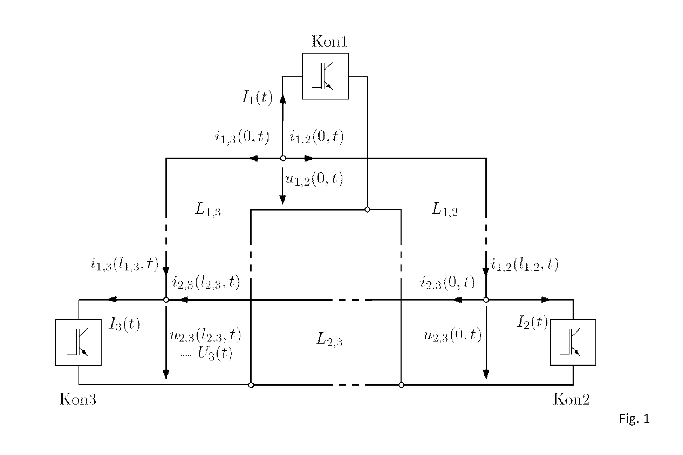

In der Figur 1 ist ein Beispielnetzwerk mit drei Konvertern dargestellt, also mit $n_K = 3$ Knoten und $n_L = 3$ Leitungen.

Das Netzwerk wird in Anlehnung an die Notation aus dem obigen Abschnitt durch die Mengen

$$\mathcal{K} = \mathcal{K}_3 = \{1,2,3\}, \qquad\qquad \mathcal{K}_1 = \emptyset \qquad\qquad \mathcal{K}_2 = \emptyset,$$

$$\mathcal{L} = \{(1,2),(2,3),(1,3)\}, \qquad \mathcal{N}_1 = \{2,3\} \qquad \mathcal{N}_2 = \{1,3\}$$

beschrieben.

Die Konverter Kon1 und Kon2 sollen im Beispiel als

Stromquellen, Kon3 dagegen als Spannungsquelle arbeiten. Die Steuergrößen des Systems sind demnach die Konverterströme $I_1$, $I_2$ und die Konverterspannung $U_3$. Für die Ortskoordinaten gilt

$$z_{1,2} = 0, \qquad\qquad z_{1,3} = 0, \qquad\qquad z_{2,3} = 0,$$

$$z_{2,1} = l_{1,2}, \qquad\qquad z_{3,1} = l_{1,3}, \qquad\qquad z_{3,2} = l_{2,3}.$$

Das in den vorangegangenen Abschnitten vorgeschlagene

Vorgehen wird nun auf das vorliegende System angewandt. Der Einfachheit halber wird angenommen, dass die Parameter R, G, L und C der Leitungen übereinstimmen.

Zur Parametrierung der Lastaufteilung im stationären Betrieb können beispielsweise die gewünschten stationären Werte der Stellgrößen $\bar{I}_1$, $\bar{I}_2$ und $\overline{U}_3$ gewählt werden. Die Zusammenhänge zwischen den Systemgrößen lassen sich dann in der Form $\overline{P_x} = \overline{Q_v}$ schreiben. Dabei gilt

$$\bar{x} = \left( \overline{U}_1 \quad \overline{U}_2 \quad \overline{I}_3 \quad \bar{i}_{1,2}(0) \quad \bar{i}_{1,3}(0) \quad \bar{i}_{2,3}(0) \quad \bar{i}_{1,2}(l_{1,2}) \quad \bar{i}_{1,3}(l_{1,3}) \quad \bar{i}_{2,3}(l_{2,3}) \right)^T,$$

$$\bar{v} = \begin{pmatrix} \bar{U}_3 & \bar{I}_1 & \bar{I}_2 \end{pmatrix}^T$$

$$\bar{P} = \begin{pmatrix} 0 & 0 & 0 & -1 & -1 & 0 & 0 & 0 & 0 \\ 0 & 0 & 0 & 0 & 0 & -1 & 1 & 0 & 0 \\ 0 & 0 & 1 & 0 & 0 & 0 & 0 & 1 & 1 \\ \bar{C}_1(l_{1,2}) & -1 & 0 & \bar{\Phi}_{12}(l_{1,2}) & 0 & 0 & 0 & 0 & 0 \\ \bar{C}_1(l_{1,3}) & 0 & 0 & 0 & \bar{\Phi}_{12}(l_{1,3}) & 0 & 0 & 0 & 0 \\ 0 & \bar{C}_1(l_{2,3}) & 0 & 0 & 0 & \bar{\Phi}_{12}(l_{2,3}) & 0 & 0 & 0 \\ \bar{\Phi}_{21}(l_{1,2}) & 0 & 0 & \bar{C}_1(l_{1,2}) & 0 & 0 & -1 & 0 & 0 \\ \bar{\Phi}_{21}(l_{1,3}) & 0 & 0 & 0 & \bar{C}_1(l_{1,3}) & 0 & 0 & -1 & 0 \\ 0 & \bar{\Phi}_{21}(l_{2,3}) & 0 & 0 & 0 & \bar{C}_1(l_{2,3}) & 0 & 0 & -1 \end{pmatrix},$$

$$\ddot{Q} = \begin{pmatrix} 0 & 1 & 0 \\ 0 & 0 & 1 \\ 0 & 0 & 0 \\ 0 & 0 & 0 \\ 1 & 0 & 0 \\ 1 & 0 & 0 \\ 0 & 0 & 0 \\ 0 & 0 & 0 \\ 0 & 0 & 0 \end{pmatrix}$$

sowie

$$\bar{C}_1(z) = \cosh(z\bar{\lambda}), \quad \bar{\Phi}_{12}(z) = -\sqrt{\frac{G}{R}}\sinh(z\bar{\lambda}) \text{ und } \bar{\Phi}_{21}(z) = -\sqrt{\frac{R}{G}}\sinh(z\bar{\lambda}).$$

Damit ergeben sich die stationären Werte für die übrigen Systemgrößen gemäß

$$\bar{x} = P^{-1}Q\bar{v}.$$

Die zugehörigen Vektoren und Matrizen zur Berechnung des Übergangs gemäß dieser Beschreibung siehe Absatz "Verfahren zur Bestimmung geeigneter Größen zur Parametrierung von Umschaltvorgängen" lauten im Laplace-Bildbereich

$$\hat{x} = \begin{pmatrix} \hat{U}_1 & \hat{U}_2 & \hat{I}_3 & \hat{i}_{1,2}(0) & \hat{i}_{1,3}(0) & \hat{i}_{2,3}(0) & \hat{i}_{1,2}(l_{1,2}) & \hat{i}_{1,3}(l_{1,3}) & \hat{i}_{2,3}(l_{2,3}) \end{pmatrix}^T,$$

$$\hat{v} = \begin{pmatrix} \hat{U}_3 & \hat{I}_1 & \hat{I}_2 \end{pmatrix}^T$$

$$P = \begin{pmatrix}
0 & 0 & 0 & -1 & -1 & 0 & 0 & 0 & 0 \\
0 & 0 & 0 & 0 & 0 & -1 & 1 & 0 & 0 \\
0 & 0 & 1 & 0 & 0 & 0 & 0 & 1 & 1 \\
C_1(l_{1,2}) & -1 & 0 & \Phi_{12}(l_{1,2}) & 0 & 0 & 0 & 0 & 0 \\
C_1(l_{1,3}) & 0 & 0 & 0 & \Phi_{12}(l_{1,3}) & 0 & 0 & 0 & 0 \\
0 & C_1(l_{2,3}) & 0 & 0 & 0 & \Phi_{12}(l_{2,3}) & 0 & 0 & 0 \\
\Phi_{21}(l_{1,2}) & 0 & 0 & C_1(l_{1,2}) & 0 & 0 & -1 & 0 & 0 \\
\Phi_{21}(l_{1,3}) & 0 & 0 & 0 & C_1(l_{1,3}) & 0 & 0 & -1 & 0 \\
0 & \Phi_{21}(l_{2,3}) & 0 & 0 & 0 & C_1(l_{2,3}) & 0 & 0 & -1
\end{pmatrix},$$

mit

$$\Phi_{12}(z) = -(G + sC)C_2(z)$$

und

$$\Phi_{21}(z) = -(R + sL)C_2(z).$$

Unter der oben vorausgesetzten Annahme, dass sich die Parameter der Leitungen nicht unterscheiden, gilt

$$P = (G + sC)C_2(l_{1,2} + l_{1,3} + l_{2,3})$$

und deshalb

$$\hat{v} = (G + sC)C_2(l_{1,2} + l_{1,3} + l_{2,3})\hat{y}.$$

Die stationären Zusammenhänge zwischen **y** und **v** ergeben sich wegen

$$\det \bar{P} = \sqrt{G/R}\,\sinh(\sqrt{RG}(l_{1,2} + l_{1,3} + l_{2,3}))$$

zu

$$\bar{y} = \sqrt{\frac{R}{G}}\,\frac{\bar{v}}{\sinh(\sqrt{RG}(l_{1,2} + l_{1,3} + l_{2,3}))}.$$

Im Zeitbereich ergeben sich damit die Gleichungen gemäß (12) zu

$$v(t) = \int_{-(l_{1,2}+l_{1,3}+l_{2,3})\tau}^{(l_{1,2}+l_{1,3}+l_{2,3})\tau} f(z,\bar{t})\left(Gy(t-\bar{t}) + C\dot{y}(t-\bar{t})\right)d\bar{t}.$$

Nachfolgend wird eine Netzwerkstruktur in baumartigen Netzwerken beschrieben.

Ein beliebiges baumartiges Netz ist **dadurch gekennzeichnet, dass** es zwischen zwei beliebigen Knoten genau einen Pfad durch das Leitungsnetz gibt. Dies bedeutet, dass ein solches Netz frei von Maschen ist. Es soll ohne Beschränkung der Allgemeinheit außerdem angenommen werden, dass alle Knoten, die nur mit einer Leitung mit dem Netz verbunden sind, Knoten vom Typ 3 sind. Diese Knoten werden Endknoten genannt. Alle übrigen Knoten seien vom Typ 1.

Aufgrund der Eindeutigkeit des Leitungspfades zwischen zwei Knoten ist nach Festlegung eines beliebigen Endknotens $K_\alpha$ als Startknoten jedem Knoten $K_\mu$ ein eindeutiger Vorgängerknoten $K_{\rho(\mu)}$ zugeordnet. Um die Notation zu vereinfachen, wird ohne Beschränkung der Allgemeinheit davon ausgegangen, dass die Nummerierung der Knoten vom Startknoten $K_\alpha$ aus aufsteigend erfolgt ist, sodass

$$\alpha < \rho(\mu) < \mu, \quad \mu \in \mathcal{K}. \tag{13}$$

Dann kann man für die Ortskoordinaten unter Ausnutzung von (1) vereinfacht

$$z_{\mu,\rho(\mu)} = l_{\mu,\rho(\mu)} := l_\mu, \quad z_{\rho(\mu),\mu} = 0, \quad \mu \in \mathcal{K}\backslash\alpha. \tag{14}$$

schreiben.

Bei einer Anwendung des Verfahrens zur Lastaufteilung im stationären und transienten Betrieb in baumartigen Netzwerken kann zur Parametrierung der Systemverhaltens vereinfacht vorgegangen werden:

- Es wird ein Knoten als Anfangsknoten $K_\alpha$ festgelegt.
  Sein Nachfolgerknoten sei $K_\beta$. Die Spannung $u_{\alpha,\beta}(0,t)$ am Knoten $K_\alpha$ wird als Komponente des zu konstruierenden flachen Ausgangs ausgewählt.

- Der Strom $i_{\alpha,\beta}(0,t)$ an diesem Knoten wird ebenfalls als Komponente des flachen Ausgangs ausgewählt.

- Es wird nun von einem bereits betrachteten Knoten ausgegangen (im ersten Schritt ist dies der in den vorhergehenden Punkten ausgewählte Anfangsknoten $K_\alpha$) und der Knoten $K_\mu$ am anderen Ende einer der am Ausgangsknoten $K_{\rho(\mu)}$ zusammentreffenden Leitungen betrachtet, sofern dieser nicht bereits behandelt wurde. Dann gilt wegen (13) stets

$$\nu > \mu, \nu \in \mathcal{N}_\mu \backslash \rho(\mu).$$

Damit folgt aus dem Knotensatz (2b) für den Startknoten $K_\alpha$

$$i_{\alpha,\beta}(0,t) = -I_\alpha(t) \tag{15}$$

und für die restlichen Knoten vom Typ 3

$$i_{\mu,\rho(\mu)}(l_\mu, t) = I_\mu(t), \quad \mu \in \mathcal{K}_3 \backslash \alpha. \tag{16}$$

Für Knoten vom Typ 1 gilt entsprechend

$$i_{\mu,\rho(\mu)}(l_\mu, t) = \sum_{\nu \in \mathcal{N}_\mu \backslash \rho(\mu)} i_{\mu,\nu}(0,t), \quad \mu \in \mathcal{K}_1. \tag{17}$$

In letzterem Fall lassen sich unter Einführung von reellen Größen $\sigma_{\mu,\nu}$, $\nu \in N_\mu \backslash \rho(\mu)$ die Ströme in den einzelnen Leitungen über den Strom $i_{\mu,\rho}(\mu)(l_\mu, t)$ wie folgt ausdrücken:

$$i_{\mu,\nu}(0,t) = \sigma_{\mu,\nu} i_{\mu,\rho(\mu)}(l_\mu, t), \quad \nu \in \mathcal{N}_\mu \backslash \rho(\mu) \tag{18}$$

wobei

$$\sum_{\nu \in \mathcal{N}_\mu \backslash \rho(\mu)} \sigma_{\mu,\nu} = 1. \tag{19}$$

Von den Variablen $\sigma_{\mu,\nu}$ werden alle bis auf eine, bedingt durch die Zwangsbedingung, als Komponenten des flachen Ausgangs ausgewählt, so dass bei Vorgabe dieser Größen die Ströme in jede der an dem Knoten $K_\mu$ angeschlossenen Leitungen bekannt ist. Dieses Vorgehen wird so lange wiederholt, bis alle Knoten im Netz betrachtet worden sind.

Die Berechnung aller Systemgrößen aus dem flachen Ausgang kann dann wie folgt vorgenommen werden:

Ausgehend von dem Knoten $K_{p,\mu}$ können Strom und Spannung am anderen Ende der Leitung $L_{\mu,p(\mu)}$ mit $\tau_\mu = \tau l_\mu$ und

der Besselfunktion erster Art erster Ordnung $J_1\left(x\right) = -\dfrac{\partial}{\partial x}J_0\left(x\right)$ durch

$$
\begin{aligned}
u_{\mu,\rho(\mu)}(l_\mu,t) = {} & \frac{e^{-\gamma\tau_\mu}}{2}u_{\mu,\rho(\mu)}(0,t-\tau_\mu) + \frac{e^{\gamma\tau_\mu}}{2}u_{\mu,\rho(\mu)}(0,t+\tau_\mu) \\
& -\beta\tau_\mu\int_{-\tau_\mu}^{\tau_\mu}\frac{e^{-\gamma\bar{t}}}{2}\frac{J_1\left(\beta\sqrt{\tau_\mu^2-\bar{t}^2}\right)}{\sqrt{\tau_\mu^2-\bar{t}^2}}u_{\mu,\rho(\mu)}(0,t-\bar{t})\,\mathrm{d}\bar{t} \\
& +\sqrt{\frac{L}{C}}\left(\frac{e^{-\gamma\tau_\mu}}{2}i_{\mu,\rho(\mu)}(0,t-\tau_\mu) - \frac{e^{\gamma\tau_\mu}}{2}i_{\mu,\rho(\mu)}(0,t+\tau_\mu)\right) \\
& -\beta\sqrt{\frac{L}{C}}\int_{-\tau_\mu}^{\tau_\mu}\frac{e^{-\gamma t}}{2}\left(\bar{t}\frac{J_1\left(\beta\sqrt{\tau_\mu^2-\bar{t}^2}\right)}{\sqrt{\tau_\mu^2-\bar{t}^2}} + J_0\left(\beta\sqrt{\tau_\mu^2-\bar{t}^2}\right)\right)i_{\mu,\rho(\mu)}(0,t-\bar{t})\,\mathrm{d}\bar{t},
\end{aligned}
$$

$$(20\mathrm{a})$$

$$
\begin{aligned}
i_{\mu,\rho(\mu)}(l_\mu,t) = {} & \frac{e^{-\gamma\tau_\mu}}{2}i_{\mu,\rho(\mu)}(0,t-\tau_\mu) + \frac{e^{\gamma\tau_\mu}}{2}i_{\mu,\rho(\mu)}(0,t+\tau_\mu) \\
& -\beta\tau_\mu\int_{-\tau_\mu}^{\tau_\mu}\frac{e^{-\gamma\bar{t}}}{2}\frac{J_1\left(\beta\sqrt{\tau_\mu^2-\bar{t}^2}\right)}{\sqrt{\tau_\mu^2-\bar{t}^2}}i_{\mu,\rho(\mu)}\gamma(0,t-\bar{t})\,\mathrm{d}\bar{t} \\
& +\sqrt{\frac{C}{L}}\left(\frac{e^{-\gamma\tau_\mu}}{2}u_{\mu,\rho(\mu)}(0,t-\tau_\mu) - \frac{e^{\gamma\tau_\mu}}{2}u_{\mu,\rho(\mu)}(0,t+\tau_\mu)\right) \\
& -\beta\sqrt{\frac{C}{L}}\int_{-\tau_\mu}^{\tau_\mu}\frac{e^{-\gamma\bar{t}}}{2}\left(\bar{t}\frac{J_1\left(\beta\sqrt{\tau_\mu^2-\bar{t}^2}\right)}{\sqrt{\tau_\mu^2-\bar{t}^2}} - J_0\left(\beta\sqrt{\tau_\mu^2-\bar{t}^2}\right)\right)u_{\mu,\rho(\mu)}(0,t-\bar{t})\,\mathrm{d}\bar{t}
\end{aligned}
$$

$$(20\mathrm{b})$$

berechnet werden.

Dadurch ist die Spannung am Knoten $K_\mu$ bekannt. Mit Hilfe der Größen $\sigma_{\mu,\nu}$, kann nun die Aufteilung des Stroms $i_{\mu,p(u)}(I_{\mu,t})$ der Leitung $L_{\mu,p(u)}$ auf die weiteren am Knoten $K\mu$ zusammentreffenden Leitungen bestimmt werden. Damit sind Spannung und Strom am Knoten $K_\mu$ in jeder der dort zusammentreffenden Leitungen bekannt. Da $K_\mu$ der Vorgängerknoten weiterer Knoten ist, können so sukzessive die Größen an allen weiteren Knoten bzw. auf allen weiteren Leitungen berechnet werden.

Dieses Vorgehen endet mit der Berechnung der Stellgrößen, wenn am Ende einer Leitung keine weiteren Leitungen angeschlossen sind.

Nachfolgend wird die Erfindung an einem baumartigen Beispielnetzwerk mit drei Konvertern erläutert.

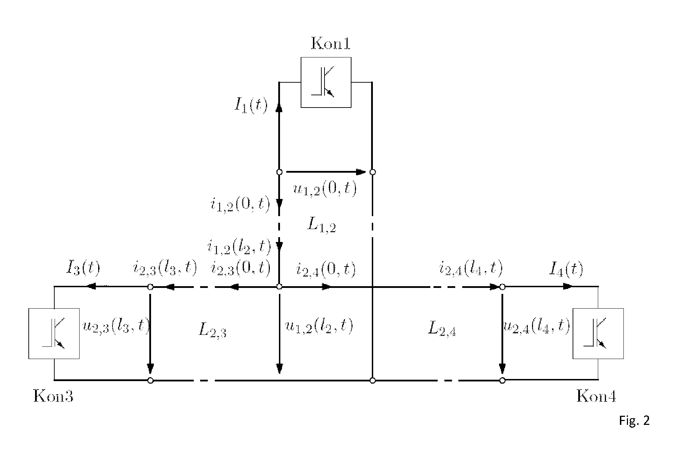

Die Figur 2 zeigt ein Beispiel für ein baumartiges Netzwerk. Es besteht aus $n_K = 4$ Knoten und $n_L = 3$ Leitungen. Das Ziel der Betriebsführung soll sein, den Energiebedarf des Konverters Kon1 durch die beiden Konverter Kon3 und Kon4 zu decken.

Deswegen ist es sinnvoll, dessen Anschlussknoten $K_1$ als Startknoten zu wählen. Damit werden die Spannung und der Strom

$$U_1(t) = u_{1,2}(0,t),$$

$$I_1(t) = -i_{1,2}(0,t)$$

am Konverter Kon1 Teil des Ausgangs. Die Zeitverläufe für diese Größen können somit frei vorgegeben werden.

Die Nummerierung der Knoten wurde entsprechend der betrachteten Aufgabe von Kon1 aus aufsteigend vorgenommen, sodass das Netzwerk in Anlehnung an die Notation aus obiger Beschreibung durch die Mengen

$$\mathcal{K} = \{1,2,3,4\}, \qquad \mathcal{K}_1 = \{2\} \qquad \mathcal{K}_3 = \{1,3,4\}$$

$$\mathcal{L} = \{(1,2),(2,3),(2,4)\}, \qquad \mathcal{N}_1 = \mathcal{N}_3 = \mathcal{N}_4 = \{2\}, \qquad \mathcal{N}_2 = \{1,3,4\}$$

beschrieben wird. Die drei Konverter Kon1, Kon3 und Kon4 sind jeweils an die Knoten $K_1$, $K_3$ und $K_4$ vom Typ 3 angeschlossen und sollen als Stromquellen arbeiten. Der Knoten $K^2$ ist vom Typ 1, also passiv. Die Steuergrößen des Systems sind die drei Konverterströme $I_1$, $I_3$ und $I_4$. Für die Ortskoordinaten gilt

$$z_{1,2} = 0, \qquad z_{2,3} = 0, \qquad z_{2,4} = 0,$$

$$z_{2,1} = l_2, \qquad z_{3,2} = l_3, \qquad z_{4,2} = l_4.$$

Das im oben beschriebenen Abschnitt vorgeschlagene Vorgehen wird nun auf das vorliegende System angewandt. Ausgehend vom ausgewählten Anfangsknoten $K_1$ bestimmt man aus den vorgegebenen Verläufen für $u_{1,2}(t)$ und $i_{1,2}(0,t)$ mit Hilfe der Beziehungen (20) die Verläufe $u_{1,2}(l_2,t)$ und $i_{1,2}(l_2,t)$ am anderen Ende der Leitung $L_{1,2}$ bei Knoten $K_2$. Dort ergeben sich daraus sofort die Spannungen

$$u_{2,3}(0,t) = u_{1,2}(l_2,t), \qquad u_{2,4}(0,t) = u_{1,2}(l_2,t)$$

für die beiden angeschlossenen Leitungen $L_{2,3}$ und $L_{2,4}$. Zur Bestimmung der Ströme führt man nun die reellen Lastaufteilungsparameter $\sigma_{2,3}$ und $\sigma_{2,4}$ ein und wählt beliebig eine der beiden Größen als dritte Komponente des Ausgangs aus. Die Wahl soll hier auf $\sigma_{2,3}$ fallen. Dadurch ergeben sich nach (18) und (19) die Ströme

$$i_{2,3}(0,t) = \sigma_{2,3}\, i_{1,2}(l_2,t),$$

$$i_{2,4}(0,t) = (1 - \sigma_{2,3})\, i_{1,2}(l_2,t).$$

Nun sind alle Ströme und Spannungen am Knoten $K_2$ bekannt. Durch erneute Anwendung von (20) zuerst für Leitung $L_{2,3}$ und dann für Leitung $L_{2,4}$ erhält man die Spannungen und Ströme an den Knoten $K_3$ und $K_4$ und damit direkt die elektrischen Größen

$$I_3(t) = i_{2,3}(l_3, t), \qquad\qquad I_4(t) = i_{2,4}(l_4, t),$$

$$U_3(t) = u_{2,3}(l_3, t), \qquad\qquad U_4(t) = u_{2,4}(l_4, t)$$

an den Konvertern Kon2 und Kon3. Dadurch sind alle Spannungen und Ströme im Netzwerk inklusive der gesuchten Steuergrößen $I_1$, $I_3$ und $I_4$ durch die Vorgabe von Zeitverläufen für die drei Größen des flachen Ausgangs

$$\boldsymbol{y}(t) = (U_1(t), I_1(t), \sigma_{2,4})^T$$

festgelegt. Der Strom $I_1(t)$ wird als Komponente des Ausgangs direkt vorgegeben. $I_3(t)$ und $I_4(t)$ ergeben sich aus obiger Rechnung.

**Patentansprüche**

1. Verfahren zur Energieverteilung in einem Gleichstromübertragungsnetz, beispielsweise bei einer Hochspannungsgleichstromübertragung HGÜ, zwischen Energiequellen und Senken, welche räumlich voneinander getrennt sind und mittels Leitungen miteinander verbindbar sind, wobei die von den Energiequellen erzeugte Energie auf die angeschlossenen Senken verteilt wird, **dadurch gekennzeichnet, dass** eine Modellbeschreibung des Gleichstromübertragungsnetzes, in welchem mindestens eine Energiequelle und zwei Senken oder mindestens zwei Energiequellen und eine Senke miteinander verschaltet sind, erzeugt wird, dass für einen Übergang von einem ersten stationären Zustand des Gleichstromübertragungsnetzes in einen zweiten stationären Zustand des Gleichstromübertragungsnetzes eine Basisgröße y gewählt wird, dass für diese Basisgröße y Trajektorien, welche das transiente Verhalten während des Übergangs bestimmen, festgelegt werden, dass mittels dieser Trajektorien für Komponenten der Basisgröße y, für eine flachheitsbasierte Steuerung, Stellgrößen der Konverter anhand der Modellbeschreibung ermittelt und die Konverter mittels dieser Stellgrößen geregelt werden.

2. Verfahren nach Anspruch 1, **dadurch gekennzeichnet, dass** das Gleichstromübertragungsnetz ein baumförmiges Netzwerk ist.

3. Verfahren nach Anspruch 1, **dadurch gekennzeichnet, dass** das Gleichstromübertragungsnetz ein maschenförmiges Netzwerk ist.

4. Verfahren nach einem der Ansprüche 1 bis 3, **dadurch gekennzeichnet, dass** die Stellgröße eines Konverters ein Strom ist.

5. Verfahren nach einem der Ansprüche 1 bis 4, **dadurch gekennzeichnet, dass** die Regelung des Gleichstromübertragungsnetzes auf der Basis einer flachheitsbasierten Steuerung erfolgt.

Fig. 1

Fig. 2